# EUROPÄISCHE PATENTSCHRIFT

(11) **EP 1 832 366 B1**
(45) Veröffentlichungstag und Bekanntmachung des Hinweises auf die Patenterteilung: **21.11.2012**
(21) Anmeldenummer: 07004219.7
(22) Anmeldetag: 01.03.2007
(51) Int. Cl.: B23D 21/00

(54) **Schneidvorrichtung zum Auftrennen eines Rohres**
Cutting device for cutting a pipe
Dispositif de coupe destiné à la coupe d'un tuyau

(30) Priorität: 08.03.2006 DE 102006010619
(43) Veröffentlichungstag der Anmeldung: 12.09.2007
(73) Patentinhaber: AREVA NP GmbH, 91052 Erlangen (DE)
(72) Erfinder: Nahr, Wolfgang, 91056 Erlangen (DE)
(74) Vertreter: Mörtel & Höfner

(56) Entgegenhaltungen:
- CH-A- 558 697
- DE-A1- 2 230 655
- GB-A- 2 299 964
- JP-A- 7 223 111
- JP-A- 60 155 315
- US-A- 1 529 489
- US-A- 3 265 279
- US-A- 3 461 555

## Beschreibung

Die Erfindung bezieht sich auf eine Schneidvorrichtung zum Auftrennen eines Rohres quer zu seiner Längsrichtung.

US-A- 1529489 stellt eine derartige Schneidvorrichtung dar, wobei die Schwershneiden an ihren gewölbten Schneiden jeweils eine zusätzliche, in der Schneidebene mit kleinerem Krümmungsradius nach innen gewölbte Ausformung aufweisen.

Beim Entsorgen nuklearer Anlagenteile fallen eine Vielzahl hoch radioaktiver Komponenten an, die vor einem Abtransport in ein Endlager konditioniert, d.h. verpackungsgerecht zerlegt werden müssen. Hierzu zählen beispielsweise Primärquellenstäbe, Sekundärquellenstäbe und Instrumentierungslanzen, die aus langen Rohren bestehen, in denen sich hoch radioaktive Einbauteile, beispielsweise Messlanzen, Neutronenquellen oder Absorbermaterial, befinden. Beim Auftrennen dieser Rohre muss nun vermieden werden, dass die innerhalb des Rohres befindlichen Einbauteile in die Umgebung freigesetzt werden. Außerdem muss dafür Sorge getragen werden, dass beim Trennvorgang entstehende feinkörnige Materialabfälle zu einer Verschmutzung des Nasslagers durch Schwebstoffe führen. Zum Zerlegen hoch radioaktiver Komponenten haben sich deshalb Schneidverfahren, insbesondere Scherschneid- und Rollschneidverfahren bewährt, mit denen der beim Trennen entstehende Materialabfall gegenüber anderen bekannten Trennverfahren, beispielsweise Sägen, deutlich verringert ist. Dennoch lässt sich insbesondere beim Auftrennen von Rohren mit innenliegenden Einbauteilen oder Füllmaterialien auch bei einem herkömmlichen Schneidverfahren nicht vermeiden, dass während und nach dem Schneidvorgang Teile oder Material aus dem Inneren des Rohres nach außen gelangen.

Der Erfindung liegt nun die Aufgabe zugrunde, eine Schneidvorrichtung anzugeben, mit der das Auftrennen eines Rohres mit innenliegenden Einbauteilen oder Füllmaterialien möglich ist, und mit der die Gefahr, dass während oder nach dem Auftrennen des Rohres innenliegende Einbauteile oder Füllmaterialien nach außen frei gesetzt werden, gegenüber bekannten Schneidvorrichtung verringert ist.

Die genannte Aufgabe wird gemäß der Erfindung gelöst mit einer Schneidvorrichtung mit den Merkmalen des Patentanspruches 1. Gemäß diesen Merkmalen ist bei einer Schneidvorrichtung zum Auftrennen eines Rohres quer zu seiner Längsachse eine Schneidschere mit zwei Scherschneiden vorgesehen, die an ihren nach innen gewölbten Schneiden jeweils eine zusätzliche an den Außendurchmesser des Rohres angepasste und in der Schneidebene nach innen gewölbte Ausformung der Schneidkante mit einem konkav gewölbten Hinterschnitt zum radialen, Kontrollierten Verpressen des Rohres während des Schneidvorgangs aufweisen. Auf diese Weise wird während des Schneidens, d.h. während der Zustellbewegung und während des aneinander Entlanggleitens der Schneidkanten eine gezielte Verformung des Rohres derart erzielt, dass dieses in der zur Schneidebene senkrechten und zur Längsachse des Rohres parallelen Ebene nicht seitlich ausweichen kann, so dass die Außenabmessungen des aufgetrennten Rohres an der Trennstelle auch in dieser Ebene kleiner sind, als der Außendurchmesser des unzertrennten Rohres zum radialen Verpressen des Rohres während des Schneidvorganges angeordnet. Es wird also erreicht, dass sich das Rohr beim Verdichten während des Schneidvorganges nur nach innen und/oder in Richtung seiner Längsachse verformt, so dass es entweder vollständig verschlossen oder aber eine verbleibende Öffnung so eingeschnürt und klein wird, dass das Austreten von lose in den abgetrennten Rohrstücken liegenden Einbauteilen oder Materialien verhindert ist. Durch das radiale Verpressen wird außerdem erreicht, dass die Außenabmessungen des Rohres im Bereich der Trennstelle den ursprünglichen Außendurchmesser des Rohres, d. h. den Außendurchmesser, den das Rohr in einem außerhalb der durch das Verpressen entstehenden Verformungszone liegenden Bereich hat, nicht überschreiten.

Zur weiteren Erläuterung der Erfindung wird auf die Ausführungsbeispiele der Zeichnung verwiesen. Es zeigen:
- Fig. 1: eine Schneidvorrichtung gemäß der Erfindung mit zwei Scherschneiden,
- Fig. 2: einen Schnitt durch die in Fig. 1 dargestellte Schneidvorrichtung senkrecht zur Schneidebene,
- Fig. 3: eine Draufsicht auf die Schneidvorrichtung der Fig. 1 in einer zur Schneidebene senkrechten Ebene,
- Fig.4 und 5: jeweils ein mit einer Schneidvorrichtung gemäß der Erfindung aufgetrenntes Rohr jeweils in einem Längsschnitt und in einer Draufsicht in Richtung der Längsachse des Rohres.

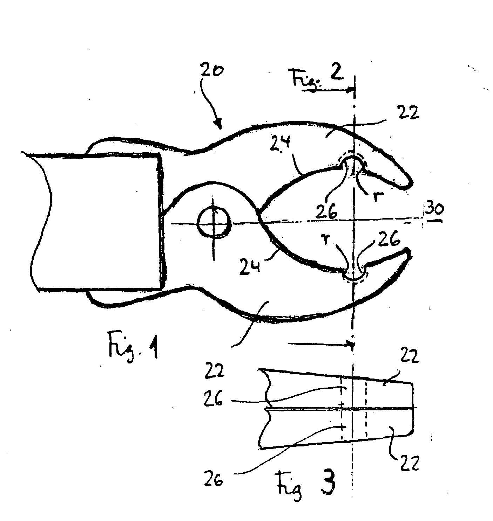

Im Ausführungsbeispiel gemäß Fig. 1 bis 3 ist eine Schneidschere 20 mit zwei Scherschneiden 22 vorgesehen, die jeweils eine in der Schneidebene (parallel zur Zeichenebene) nach innen (konkav) gewölbte Schneide 24 aufweist. Auf einem Teilbereich dieser gewölbten Schneide 24 ist die Scherschneide mit einer zusätzlichen in der Schneidebene 30 (parallel zur Zeichenebene) mit deutlich kleineren Krümmungsradius ebenfalls nach innen (konkav) gewölbten, insbesondere kreisrunden Ausformung 26 versehen, wobei deren Krümmungsradius r dem Radius des aufzutrennenden Rohres entspricht.

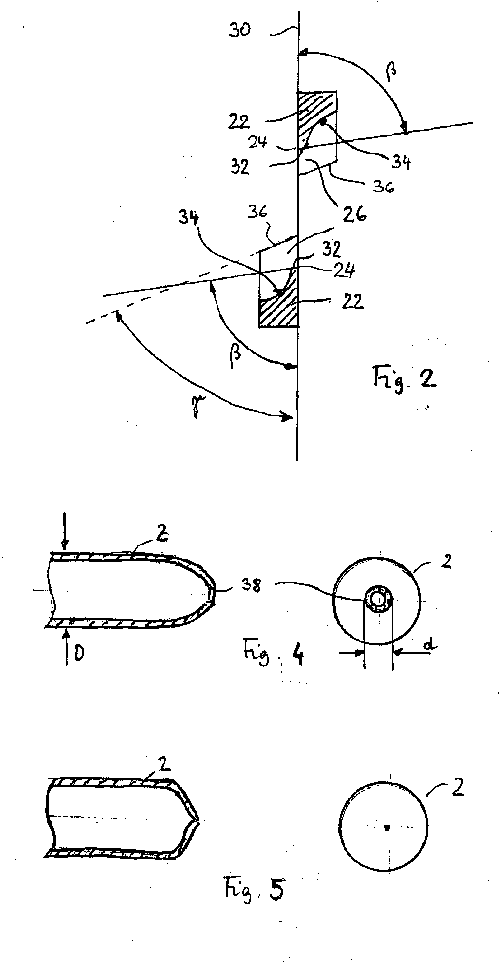

Im Querschnitt gemäß Fig. 2 ist zu erkennen, dass die Schneiden 24 der Scherschneiden 22 im Bereich dieser Ausformung 26 eine von der Schneidebene 30 ausgehende gerade Schneidkante 32 mit relativ großem Schneidenwinkel β aufweisen, an die sich jeweils ein konkav gewölbter und in Fig. 1 gestrichelt angedeuteter Hinterschnitt 34 anschließt. Außerhalb des Bereiches dieser Ausformung 26 weisen die Scherschneiden 22 einen geradlinig verlaufenden Hinterschnitt 36 auf.

Durch die Formgebung der Ausformung 26 sowohl in der Schneidebene 30 als auch senkrecht dazu im Bereich des Hinterschnittes 34 wird beim Schneiden vor dem eigentlichen Abscheren oder Abreißen eine gezielte Verformung, d.h. eine Einschnürung des Rohres im Bereich der Trennstelle erzielt, so dass durch die Gestalt der Ausformung 26 die Gestalt der Trennstelle, d. h. die Gestalt des Rohres im Bereich seiner Trennstelle und die Form der gegebenenfalls verbleibenden Rohröffnung gezielt beeinflusst werden kann.

Der Draufsicht gemäß Fig. 3 ist zu entnehmen, dass die beiden Ausformungen 26 in den Scherschneiden 22 vor dem Beginn des eigentlichen Schneidvorganges einen gestrichelt angedeuteten Kanal bilden, der das Rohr aufnimmt und durch seine konkave Formgebung sowohl in der Schneidebene als auch senkrecht dazu eine kontrollierte Verformung oder ein kontrolliertes Verpressen des Rohres verursacht, bevor die aneinander in der Schneidebene entlang gleitenden Schneidkanten der Ausformung 26 durch zunehmendes Verringern des freien Querschnitts zwischen ihnen den eigentlichen Scherschneidvorgang, d. h. das Abreißen an der Schnittkante einleiten. Mit anderen Worten: Ausformung 26 und Hinterschnitt 34 wirken während des Scherschneidens als die Außenabmessung der Schnittkante verringernde Pressvorrichtung.

In Fig. 4 ist das Ergebnis eines Schneidvorganges dargestellt, wie er mit einer Scherschneidvorrichtung gemäß Fig. 1 bis 3 erzielt wird, wenn bei Verwendung der Scherschneidvorrichtung ein Schnitt mit der konkav gewölbten Schneide 24 innerhalb des Bereiches der Ausformung 26 durchgeführt wird. Deutlich ist zu erkennen, dass an der Schnittkante eine nahezu kreisrunde Öffnung 38 erzielt wird, deren Durchmesser d signifikant kleiner ist als der Durchmesser D des Rohres 2, wobei die Zunahme des Außendurchmessers des Rohres 2 in einem an die Schneidkante anschließenden Bereich durch den konkaven Hinterschnitt auf weniger als 5% begrenzt wird.

Im Schneidbeispiel gemäß Fig. 5 wird ein vollständiger Verschluss des Rohres 2 erreicht. Eine solche gezielte Verformung kann insbesondere dann erreicht werden, wenn der Schneidenwinkel β sehr groß gewählt wird.

## Patentansprüche

1. Schneidvorrichtung zum Auftrennen eines Rohres (2) quer zu seiner Längsachse (4), mit einer Schneidschere (20) mit zwei Scherschneiden (22), die an ihren nach innen gewölbten Schneiden (24) jeweils eine zusätzliche, an den Außendurchmesser des Rohres (2) angepasste und in der Schneidebene (30) mit deutlich kleinerem Krümmungsradius nach innen gewölbte Ausformung (26) mit einem konkav gewölbten Hinterschnitt (34) zum radialen, kontrollierten Verpressen des Rohres (2) während des Schneidvorganges aufweisen.

## Claims

1. Cutting device for cutting a pipe (2) transversely to its longitudinal axis (4), having a cutting claw (20) with two cutting blades (22), which each have an additional concave indent (26) on their concave cutting blades (24) adapted to the external diameter of the pipe (2) and with a clearly smaller radius of curvature in the cutting plane (30), with a concave undercut (34) for radial, controlled compression of the pipe (2) during the cutting process.

## Revendications

1. Dispositif de coupe pour l'ouverture d'une conduite (2) perpendiculairement à son axe longitudinal (4), avec un ciseau de découpage (20) avec deux lames de cisaillement (22) comportant, sur chacune de leurs lames courbées vers l'intérieur (24), une forme (26) supplémentaire courbée vers l'intérieur, avec un rayon de courbure nettement inférieur dans la zone de coupe (30), et adaptée au diamètre extérieur de la conduite (2), avec une contre-dépouille courbée de façon concave (34), pour la compression radiale contrôlée de la conduite (2) pendant le procédé de découpage.
